# EUROPÄISCHE PATENTSCHRIFT

(11) **EP 1 567 683 B1**
(45) Veröffentlichungstag und Bekanntmachung des Hinweises auf die Patenterteilung: **28.06.2006**
(21) Anmeldenummer: 03779947.5
(22) Anmeldetag: 17.11.2003
(51) Int. Cl.: C22B 43/00

(54) **VERFAHREN ZUR ENTFERNUNG VON QUECKSILBER AUS MIT QUECKSILBER VERUNREINIGTEN LÖSUNGEN**
METHOD FOR REMOVING MERCURY FROM SOLUTIONS WHICH ARE CONTAMINATED WITH MERCURY
PROCEDE POUR ELIMINER LE MERCURE CONTENU DANS DES SOLUTIONS CONTAMINEES PAR DU MERCURE

(30) Priorität: 26.11.2002 DE 10255240
(43) Veröffentlichungstag der Anmeldung: 31.08.2005
(73) Patentinhaber: BASF Aktiengesellschaft, 67056 Ludwigshafen (DE)
(72) Erfinder: BENDER, Hans-Jürgen, 67251 Freinsheim (DE); FRIEDRICH, Holger, 67240 Bobenheim-Roxheim (DE); GUTH, Josef, 67251 Freinsheim (DE)
(86) Internationale Anmeldenummer: PCT/EP2003/012817
(87) Internationale Veröffentlichungsnummer: WO 2004/048624

(56) Entgegenhaltungen:
- EP-A- 0 479 052
- DD-A- 221 968
- DE-A- 2 051 725
- DE-A- 3 335 127
- DE-A- 19 704 889
- US-A- 5 962 365
- CARLSON G.A., ESTEP E.E. UND JACQUEAU D.: "Eine poröse Kathodenzelle für die Laugenreinigung" CHEMIE-ING.-TECHN., Bd. 45, Nr. 4, Februar 1972 (1972-02), Seiten 217-219, XP009026443

## Beschreibung

Die vorliegende Erfindung betrifft ein Verfahren zur Entfernung von Quecksilber aus Flüssigkeiten. Insbesondere betrifft die Erfindung ein Verfahren zur Entfernung von Quecksilber aus Lösungen, speziell ein Verfahren zur Entfernung von Quecksilber aus den bei der Zersetzung von Alkaliamalgam durch Wasser oder Alkohole entstehenden Lösungen, vor allem wässriger Alkalihydroxidlösung oder alkoholischer Alkalialkoholatlösung.

Bei einigen chemischen Verfahren fallen Quecksilber enthaltende Flüssigkeiten an. Quecksilber ist aufgrund seiner Toxizität meistens eine unerwünschte Verunreinigung und muss deshalb üblicherweise entfernt werden. Beispielsweise wird bei der Chloralkalielektrolyse nach dem A-malgamverfahren Chlor und ein Alkaliamalgam erzeugt. Dieses Alkaliamalgam wird zur Gewinnung der wichtigen und in großen Mengen hergestellten Produkte Alkalihydroxid oder Alkalialkoholat unter Zugabe von Wasser oder Alkohol zersetzt, wobei das Quecksilber wieder freigesetzt und in die Elektrolyse zurückgeführt wird. Die bei der Amalgamzersetzung erzeugte wässrige Lösung von Alkalihydroxid (üblicherweise als "Alkalilauge" bezeichnet, speziell bezeichnet "Natronlauge" eine wässrige Natriumhydroxidlösung und "Kalilauge" eine wässrige Kaliumhydroxidlösung) oder alkoholische Lösung von Alkalialkoholat enthält jedoch stets in geringen Mengen Quecksilber, typischerweise in einem Bereich von 10 bis 50 ppm ("parts per million", also Milligramm pro Kilogramm. Im Rahmen dieser Erfindung geben die Angaben ppm oder ppb, "parts per billion", also Mikrogramm pro Kilogramm stets Massenverhältnisse wieder). Dieser Quecksilbergehalt kann unter Umständen auch Werte oberhalb von 100 ppm erreichen. Diese Quecksilbermenge ist für die meisten Anwendungen von Alkalihydroxiden oder Alkalialkoholaten nicht tolerabel und muss durch ein Verfahren zur Quecksilberentfernung ("Entquickung") erniedrigt werden. Angestrebt werden dabei Werte von höchstens wenigen ppb, idealerweise höchstens 3 ppb, der Quecksilbergehalt ist also um einen Faktor von etwa 10⁴ zu erniedrigen.

Das Quecksilber liegt üblicherweise mindestens zum Teil in Form von Quecksilbermetall vor, das meist in Form feinster Tröpfchen in der Flüssigkeit dispergiert oder - unterhalb der Löslichkeitsgrenze - gelöst ist.

Es sind bereits verschiedene Verfahren zur Entfernung von Quecksilber aus Produktströmen bekannt, auch im Zusammenhang mit der Alkaliamalgamspaltung. Oft wird dazu eine Filtration durch eine Kohleschicht verwendet., die technisch üblicherweise als Filtration durch eine Kohleschicht ausgestaltet und vom Wirkungsprinzip her eine Adsorption von Quecksilber an Kohle ist. Mit einem einzelnen Kohlefiltrationsschritt ist die geforderte Quecksilber-Abreicherung üblicherweise nicht zu erreichen. Die Filtration durch eine Kohleschicht ist daher üblicherweise einer von mehreren Schritten eines Gesamtverfahrens zur Abreicherung von Quecksilber auf den gewünschten Endwert. Mit einem Kohlefiltrationsschritt kann der Quecksilbergehalt typischerweise um den Faktor in der Größenordnung von 10 gesenkt werden. Weitere bekannte Verfahrensschritte zur Abreicherung von Quecksilber sind beispielsweise die Koaleszenzfiltration, das Einengen, d.h., das Abdampfen des Lösungsmittels, oder Filtration durch anorganisches Fasermaterial.

DE 20 51 725 A1 lehrt ein Verfahren zur Entfernung von Quecksilberchloriden aus der in einer Chloralkali-Elektrolysezelle vorliegenden Alkalichloridsole durch Adsorption an Aktivkohle. DE 34 38 098 A1 offenbart ein Verfahren zur Aktivkohlefiltration von Quecksilber enthaltenden Lösungen, bei dem die Lösung entgegen der Schwerkraft durch ein Aktivkohlefilter geführt wird. Die japanische Anmeldeschrift JP 58-128182 lehrt ein Verfahren, bei dem die von Quecksilber zu befreiende Lösung durch Aktivkohle und Kohlepulver filtriert wird. DE 41 16 890 offenbart ein Verfahren zur Entfernung von Quecksilber aus Abfallströmen, bei dem die von Quecksilber zu befreiende Lösung mit einem Adsorptionsmittel in Kontakt gebracht wird, das ein amalgamierendes Metall auf einem Aktivkohleträger mit einer BET-Oberfläche von 300 bis 1000 m²/g enthält. Aus DE 26 43 478 ist die Verwendung von Aktivkohle mit einer spezifischen Oberfläche von mindestens 250 m²/g zur Entfernung von Quecksilber aus Flüssigkeiten durch Adsorption bekannt. Der Einsatz von Aktivkohle-Anschwemmfiltern zur Quecksilberentfernung aus Natronlauge, Kalilauge oder Alkoholatlösungen ist technisch üblich, wie von Isfort, Chemie Anlagen und Verfahren ("CAV"), Sept. 1972, Seiten 65-69 beschrieben. Die vergleichsweise einfache Aktivkohlebehandlung führt jedoch nicht in allen Fällen zu zufrieden stellenden Ergebnissen. Insbesondere muss zur Erreichung der erwünschten niedrigen Quecksilberwerte eine sehr feinkörniges Pulver einer hochoberflächigen Aktivkohle verwendet werden. Vor allem bei der Filtration von Alkoholatlösungen, in denen sich (im Gegensatz zu wässrigen Laugen) durch Nebenreaktionen mit dem Alkohol oder Spaltung des Alkoholats sehr feinteilige Schlämme bilden, setzen sich die Aktivkohlefilter durch Ablagerungen dieser Schlämme sehr schnell zu, so dass nur eine unbefriedigende Standzeit der Filter erreicht wird, was die Aktivkohlebehandlung wirtschaftlich unbefriedigend macht. DE 197 04 889 offenbart als Abhilfe ein dreistufiges Verfahren zur Entquickung von Alkalialkoholatlösungen, bei dem in einer ersten Stufe die Lösung durch inertes Fasermaterial geleitet wird, um so die feinteiligen Schlämme abzutrennen und als Nebeneffekt den Quecksilbergehalt um einen Faktor von etwa 10 zu senken. Die Lösung wird danach in einer zweiten Stufe durch einen üblichen Aktivkohlefilter mit einer hochoberflächigen und feinteiligen Aktivkohle filtriert, was den Quecksilbergehalt wiederum um einen Faktor von etwa 10 absenkt. In einer dritten Stufe wird eine destillative Aufkonzentration des Alkoholats durchgeführt, also durch Abdampfen des Alkohols die Lösung eingeengt und so die gewünschte Alkoholatkonzentration eingestellt, indem die Alkoholatlösung in einer Destillationsblase vorgelegt und über eine Füllkörperkolonne Alkohol abdestilliert wird. Dabei sinkt die Quecksilberkonzentration nochmals um einen Faktor von etwa 10. Insgesamt werden mit dem beschriebenen Verfahren Quecksilbergehalte von 28 bis 50 ppb erreicht. Auch mit diesem Gesamtverfahren können die gewünschten Quecksilbergehalte von höchstens 3 ppb aber nicht erreicht werden.

Bei den bekannten Kohlefiltrationsverfahren ist unter anderem die Neigung der hochoberflächigen Aktivkohlen zur Bildung feinster Aktivkohlepulver, störend, die zu hohen Druckverlusten und niedrigen Filterleistungen führt. Ein weiteres, mit üblichen Aktivkohlefiltrationen verbundenes Problem ist die Entsorgung der mit Quecksilber beladenen Aktivkohle. In aller Regel ist dazu die Aktivkohle chemisch zu behandeln, wobei als Rückstand ein quecksilberhaltiger Aktivkohleschlamm erhalten wird, der deponiert werden muss.

Aufgabe der vorliegenden Erfindung ist es daher, ein einfaches und wirtschaftlich befriedigendes Verfahren zur Kohlefiltration finden, mit dem die Quecksilbergehalte in Flüssigkeiten, insbesondere in Alkalilaugen, aber auch in Alkalialkoholatlösungen abgesenkt werden können. Dementsprechend wurde ein Verfahren zur Entfernung von Quecksilber aus mit Quecksilber verunreinigten Lösungen durch Filtration durch ein Kohlefilter gefunden, das dadurch gekennzeichnet ist, dass man als Kohle Elektrographit verwendet.

Überraschenderweise wurde gefunden, dass mit dem erfindungsgemäßen Verfahren auf einfachere und wirtschaftliche befriedigendere Weise als mit bekannten Verfahren Quecksilber aus Lösungen abgereichert werden kann. Das erfindungsgemäße Verfahren ist insbesondere zur Abreicherung von Quecksilber in Alkalilaugen und auch in Alkalialkoholatlösungen geeignet und kann mit anderen Reinigungsverfahren oder -verfahrensschritten kombiniert werden, um höhere Quecksilber-Abreicherungsgrade zu erreichen. Ein besonderer Vorteil des erfindungsgemäßen Verfahren ist, dass der mit Quecksilber beladene Elektrographit im Gegensatz zu Aktivkohlen auf einfache Weise regenerierbar ist.

Vorzugsweise wird das erfindungsgemäße Verfahren zur Entfernung von Quecksilber aus Alkalilaugen oder Alkalialkoholatlösungen eingesetzt, insbesondere solchen Alkalilaugen oder Alkalialkoholatlösungen, die durch Zersetzung von Alkaliamalgam mit Wasser oder Alkohol erzeugt werden. Die Herstellung von Alkaliamalgam und seine Zersetzung mit Wasser oder Alkohol, unkatalysiert oder unter Einsatz von Katalysatoren, sind bekannte Technologien. Als Alkali werden Lithium, Natrium, Kalium, Rubidium oder Cäsium eingesetzt, vorzugsweise Natrium oder Kalium. Durch Zersetzung von Natrium- oder Kaliumamalgam mit Wasser entsteht Natron- oder Kalilauge. Durch Zersetzung von Natrium- oder Kaliumamalgam mit Alkohol entsteht eine Lösung des entsprechenden Natrium- oder Kaliumalkoholats im entsprechenden Alkohol. Die Lauge oder die Alkoholatlösung sind dabei stets, wie oben beschrieben, mit Quecksilber verunreinigt, das mit dem erfindungsgemäßen Verfahren vollständig oder weitgehend entfernt wird.

Als Alkohol zur Erzeugung einer mit dem erfindungsgemäßen Verfahren zu behandelnden Alkalialkoholatlösung kann jeder beliebige Alkohol eingesetzt werden. Vorzugsweise wird ein substituierter oder unsubstituierter aliphatischer, alicyclischer, aromatischer, arylaliphatischer, arylalicyclischer, cycloalkylaromatischer oder alkylaromatischer Alkohol verwendet. Insbesondere werden die geradkettigen oder verzweigten aliphatischen Alkohole mit einem bis 6 Kohlenstoffatomen verwendet, wie Methanol, Ethanol, 1-Propanol ("n-Propanol"), 2-Propanol ("isoPropanol"), 1-Butanol ("n-Butanol"), 2-Butanol ("iso-Butanol"), 2-Methyl-1-propanol ("sec.-Butanol"), 1,1-Dimethyl-1-Ethanol ("tert.-Butanol"), oder die einzelnen isomeren C5- oder C6-Alkohole. Besonders bevorzugt ist die Verwendung von Methanol oder Ethanol.

Durch Zersetzung von Natrium- oder Kaliumamalgam mit Methanol oder Ethanol wird eine Lösung von Natriummethanolat oder Kaliummethanolat in Methanol oder eine Lösung von Natriumethanolat oder Kaliumethanolat in Ethanol erzeugt, die dann dem erfindungsgemäßen Verfahren unterzogen wird.

Die Konzentration der im erfindungsgemäßen Verfahren eingesetzten Lösung - also beispielsweise der durch Alkaliamalgamzersetzung mit Wasser oder Alkohol hergestellten Alkalilauge oder Alkalialkoholatlösung kann in weiten Bereichen variiert werden, sie ist für die vorliegende Erfindung nicht entscheidend.

Typischerweise wird bei der Reinigung von Natrium- oder Kalilauge im Allgemeinen eine Konzentration von mindestens 10 Gew.-%, vorzugsweise mindestens 15 Gew.-%, in besonders bevorzugter Weise mindestens 20 Gew.-% sowie im Allgemeinen höchstens 70 Gew.-%., vorzugsweise höchstens 65 Gew.-% und in besonders bevorzugter Weise höchstens 60 Gew.-% von Natrium - oder Kaliumhydroxid in Wasser eingestellt. Bei der Reinigung von Natrium- oder Kaliummethanolat wird im Allgemeinen eine Konzentration von mindestens 20 Gew.-%, in bevorzugter Weise mindestens 25 Gew.-% nd in besonders bevorzugter Weise mindestens 27 Gew.-% sowie im Allgemeinen höchstens 40 Gew.%, in bevorzugter Weise höchstens 32 Gew.% und in besonders bevorzugter Weise höchstens 31 Gew.-% Natrium- oder Kaliummethanolat in Methanol eingestellt. Bei der Reinigung von Natrium- oder Kaliumethanolat wird im Allgemeinen eine Konzentration von mindestens 10 Gew.-%, in bevorzugter Weise mindestens 15 Gew.% und in besonders bevorzugter Weise mindestens 16 Gew.-% sowie im Allgemeinen höchstens 30 Gew.%, in bevorzugter Weise höchstens 22 Gew.-% und in besonders bevorzugter Weise höchstens 20 Gew.-% Natrium- oder Kaliumethanolat in Ethanol eingestellt.

Erfindungsgemäß nach Anspruch 1 wird die von Quecksilber zu befreiende Lösung durch Elektrographit filtriert. Elektrographit ist eine übliche Bezeichnung für bestimmte handelsübliche Graphitsorten, die üblicherweise aus Erdölrückständen wie dem sogenannten Petrolkoks, durch Brennen bei 800 bis 1300 °C und anschließende Graphitierung, üblicherweise in sogenannten Castner- oder Archeson-Öfen, in denen mittels Durchleiten von elektrischem Strom Temperaturen oberhalb von 2000 °C erzeugt werden (vgl. zum Beispiel Stichwort "Graphit" in: CD Römpp Chemie-Lexikon - Version 1.0, Georg Thieme Verlag Stuttgart/New York 1995 oder Stichwort "Graphite", dort insbesondere Punkt "4.1.1 Manufacture", in Ullmann's Encyclopedia of Industrial Chemistry, 6. Auflage, 2000 Electronic Release, Wiley-VCH Verlag GmbH, Weinheim). Elektrographit wird beispielsweise als Elektrodenmaterial oder als Ausgangsstoff für die Herstellung korrosionsfester Bauteile verwendet. Elektrographit unterscheidet sich von Aktivkohlen (vgl. dazu etwa Stichwort "Aktivkohle" in: CD Römpp Chemie-Lexikon - Version 1.0, Georg Thieme Verlag Stuttgart/New York 1995 oder Stichwort "Carbon", dort insbesondere Punkt "5.Activated Carbon", in Ullmann's Encyclopedia of Industrial Chemistry, 6. Auflage, 2000 Electronic Release, Wiley-VCH Verlag GmbH, Weinheim) unter Anderem durch eine erheblich niedrigere BET-Oberfläche. Im Gegensatz zu Elektrographit ist Aktivkohle ein Konglomerat, das auch feinste graphitartige Partikel enthält, jedoch nicht die typische gestapelte Schichtstruktur des eigentlichen Graphits aufweisen.

Der erfindungsgemäß zu verwendende Elektrographit weist eine BET-Oberfläche von im Allgemeinen bei mindestens 0,2 m²/g, vorzugsweise mindestens0,5 m²/g sowie im Allgemeinen höchstens 10 m²/g, vorzugsweise höchstens 5 m²/g auf. Ein bevorzugter Elektrographit weist eine Oberfläche von ca. 1 m²/g auf. Der erfindungsgemäß zu verwendende Elektrographit wird in form von Partikeln mit einer mittleren Partikelgröße von im Allgemeinen mindestens 20 Mikrometer, sowie höchstens 1000 Mikrometer, vorzugsweise höchstens 500 Mikrometer eingesetzt. Die mit Quecksilber verunreinigte Lösung wird durch eine Schicht aus derartigen Körnern derartigen Elektrographits filtriert, die im Allgemeinen mindestens 0,5 mm, vorzugsweise mindestens 1 mm sowie höchstens 30, vorzugsweise höchstens 10 mm dick ist. Dazu kann jede Filterkonstruktion eingesetzt werden, in der eine entsprechende Kohlefilterschicht angeschwemmt werden kann, beispielsweise Flachfilter, Scheibenfilter, Kerzenfilter, Tellerfilter, Nutschen, Kantenspaltfilter oder Kunststoffschnurfilterkerzen. Bevorzugt ist die Verwendung von Kantenspaltfiltern, auf die der Kohlenstoff in Form einer Suspension im verwendeten Lösungsmittel angeschwemmt wird. Dies ist wohlbekannter Stand der Technik.

Mit dem erfindungsgemäßen Kohlefiltrationsverfahren wird typischerweise eine Quecksilberabreicherung um den gleichen Faktor wie in bekannten Kohlefiltrationsverfahren erreicht.

Ein besonderer Vorteil des erfindungsgemäßen Verfahrens ist die Regenerierbarkeit der Filterkohle. Zur Regenerierung des verwendeten Elektrographits wird dieser bequemerweise mechanisch belastet, also beispielsweise gerührt. Ganz besonders einfach ist die Anwendung von Ultraschall. Dazu wird der mit Quecksilber beladene Elektrographit, vorzugsweise in Form einer Suspension in dem Lösungsmittel oder der Lösung, aus dem oder der mittels des erfindungsgemäßen Kohlefiltrationsverfahrens Quecksilber bis zur Erschöpfung der Filterkohle entfernt wurde, mit Ultraschall beschallt. Das Quecksilber scheidet sich dabei als flüssige Phase gemäß der Schwerkraft unten ab. Die vom Quecksilber befreite Kohle kann dann erneut als Filterschicht an ein Filter angeschwemmt werden. Die Beschallungsintensität-, -frequenz und -dauer wird anhand dem gewünschten Regenerierungsgrad der Kohle eingestellt, also letztlich nach wirtschaftlichen Erwägungen.

Das erfindungsgemäße Kohlefiltrationsverfahren kann mit jedem anderen bekannten Quecksilber-Abreicherungsverfahren zu einem Gesamtverfahren kombiniert werden, um die Abreicherungswirkung der verschiedenen Verfahrensschritte des Gesamtverfahrens zu kombinieren. Beispielsweise führt die Kombination des erfindungsgemäßen Verfahrens mit einem weiteren Verfahren, mit dem Quecksilber um den Faktor 10 abgereichert wird, zu einer Gesamtabreicherung um einen Faktor von ungefähr 10³, und die Kombination mit zwei weiteren Verfahren, mit denen Quecksilber jeweils um einen Faktor von 10 abgereichert werden kann, zu einer Gesamtabreicherung um den Faktor 10⁴. Die Reihenfolge der Durchführung der einzelnen Verfahrensschritte des Gesamtverfahrens kann grundsätzlich frei gewählt werden. Im Allgemeinen ist es vorteilhaft, Verfahrensschritte, die vorwiegend zur Entfernung größerer Quecksilbermengen geeignet sind, zuerst durchzuführen, und Feinreinigungsverfahren abschließend durchzuführen. Beispielsweise ist es empfehlenswert, mechanische Verfahren wie etwa die Koaleszenz von Quecksilbertröpfchen zu größeren Tropfen vor dem erfindungsgemäßen Kohlefiltrationsverfahren durchzuführen.

Das erfindungsgemäße Kohlefiltrationsverfahren kann beispielsweise auch mit einem Verfahrensschritt zur destillativen Abreicherung von Quecksilber durch einengen der Lösung kombiniert werden. Weiterhin kann das erfindungsgemäße Destillationsverfahren mit einem Filtrationsschritt unter Verwendung von Fasermaterialien kombiniert werden. Auch derartige Filtrationsverfahren sind bekannt.

Es ist ebenso möglich, die Filtrationsschritte mehrfach durchzuführen oder sie in beliebiger Weise zu kombinieren. Beispielsweise kann mehrfach durch Kohle, mehrfach durch Fasermaterial, oder mehrfach durch Kohle und Fasermaterial filtriert werden. Die konkrete Ausgestaltung und Abfolge von einzelnen Filtrationsschritten ist eine Routineaufgabe des Fachmanns, die dieser gemäß dem zu behandelnden Strom, seinem Verunreinigungsgehalt und den Anforderungen an die Abreicherung löst.

Mit dem beschriebenen Verfahren ist eine sehr einfache Abreicherung von Quecksilber möglich, ohne dass die Nachteile der bekannten Kohlefiltrationsverfahren in Kauf genommen werden müssten. Insbesondere führt das erfindungsgemäße Verfahren zu hohen Standzeiten der Kohlefilter.

### Beispiele

### Beispiel 1

Ein Kantenspaltfilter wurde durch Anschwemmen einer Suspension aus Elektrographit (mittlere Korngröße 300 Mikrometer, BET-Oberfläche 1,1 m²/g) in Methanol mit einer 2 bis 3 mm starken Kohleschicht belegt. Bei einer Temperatur von 70-80 °C wurde eine quecksilberbelastete methanolische Natriummethanolatlösung (27 Gew.-%) bei einer Durchflussmenge von 12-15 Liter pro 100 cm² Filterfläche und Stunde filtriert.

Vor und nach Filtration wurden jeweils 4 Proben entnommen und auf ihren Quecksilbergehalt analysiert. Die Ergebnisse sind in der folgenden Tabelle dargestellt.

| vor Filtration | nach Filtration |
|---|---|
| [ppm] | [ppm] |
| 23 | 3,3 |
| 21 | 4,3 |
| 18 | 3,3 |
| 17 | 3,1 |

### Beispiel 2

Es wurde mit einer 27 Gew.-%igen Natriummethanolatlösung wie in Beispiel 1 eine Kohlefiltration durchgeführt. Vor und nach Filtration wurden jeweils 5 Proben entnommen und auf ihren Quecksilbergehalt analysiert. Die Ergebnisse sind in der folgenden Tabelle dargestellt.

| vor Filtration | nach Filtration |
|---|---|
| [ppm] | [ppm] |
| 18 | 2,3 |
| 19 | 3,5 |
| 19 | 2,9 |
| 19 | 2,3 |
| >100 | 1,8 |

### Beispiel 3

Es wurde mit einer 27 Gew.-%igen Natriummethanolatlösung wie in Beispiel 1 eine Kohlefiltration durchgeführt. Vor und nach Filtration sowie nach der Destillation wurden jeweils 2 Proben entnommen und auf ihren Quecksilbergehalt analysiert. Die Ergebnisse sind in der folgenden Tabelle dargestellt.

| vor Filtration | nach Filtration |
|---|---|
| [ppm] | [ppm] |
| 10,8 | 3,6 |
| 13,8 | 4,2 |

Die Beispiele zeigen, dass mit dem erfindungsgemäßen Verfahren trotz Verwendung einer relativ groben Filterkohle eine gute Quecksilber-Abreicherung erzielt wird.

## Patentansprüche

1. Verfahren zur Entfernung von Quecksilber aus mit zumindest teilweise in metallischer Form vorliegendem Quecksilber verunreinigten Lösungen durch Filtration durch ein Kohlefilter, **dadurch gekennzeichnet, dass** man als Kohle Elektrographit mit einer mittleren Partikelgröße im Bereich von 20 bis 1000 Mikrometer verwendet.

2. Verfahren nach Anspruch 1, **dadurch gekennzeichnet, dass** man Elektrographit mit einer BET-Oberfläche im Bereich von 0,5 bis 10 m²/g, verwendet.

3. Verfahren nach einem der Ansprüche 1 oder 2, **dadurch gekennzeichnet, dass** man die mit Quecksilber verunreinigte Lösung durch eine Kohleschicht mit einer Dicke im Bereich von 0,5 mm bis 30 mm filtriert.

4. Verfahren nach Anspruch 1, **dadurch gekennzeichnet, dass** man Quecksilber aus einer mit Quecksilber verunreinigten Alkalilauge entfernt.

5. Verfahren nach Anspruch 1, **dadurch gekennzeichnet, dass** man Quecksilber aus einer mit Quecksilber verunreinigten alkoholischen Alkalialkoholatlösung entfernt.

## Claims

1. A process for the removal of mercury from solutions contaminated with mercury present at least partially in metallic form, by filtration through a carbon filter, which comprises using electrode graphite having a mean particle size in the range from 20 to 1000 micrometers as carbon.

2. The process according to claim 1 wherein electrode graphite having a BET surface area in the range from 0.5 to 10 m²/g is used.

3. The process according to either of claims 1 and 2 wherein the solution contaminated with mercury is filtered through a carbon layer having a thickness in the range from 0.5 mm to 30 mm.

4. The process according to claim 1 wherein mercury is removed from an alkali liquor contaminated with mercury.

5. The process according to claim 1 wherein mercury is removed from an alcoholic alkali metal alkoxide solution contaminated with mercury.

## Revendications

1. Procédé d'élimination du mercure dans des solutions contaminées par du mercure qui se présente au moins partiellement sous forme métallique, par filtration au travers d'un filtre à charbon, **caractérisé en ce que**, comme charbon, on utilise de l'électrographite présentant une taille moyenne de particule de l'ordre de 20 à 1 000 micromètres.

2. Procédé suivant la revendication 1, **caractérisé en ce qu'**on utilise de l'électrographite présentant une surface spécifique BET de l'ordre de 0,5 à 10 m²/g.

3. Procédé suivant l'une des revendications 1 et 2, **caractérisé en ce qu'**on filtre la solution contaminée par du mercure au travers d'une couche de charbon ayant une épaisseur de l'ordre de 0,5 mm à 30 mm.

4. Procédé suivant la revendication 1, **caractérisé en ce qu'**on élimine du mercure dans une lessive alcaline contaminée par du mercure.

5. Procédé suivant la revendication 1, **caractérisé en ce qu'**on élimine du mercure dans une solution alcoolique d'alcoolate de métal alcalin contaminée par du mercure.
